# FASCICULE DE BREVET EUROPEEN

(11) **EP 0 877 690 B1**
(45) Date de publication et mention de la délivrance du brevet: **19.12.2001**
(21) Numéro de dépôt: 96934910.9
(22) Date de dépôt: 15.10.1996
(51) Int. Cl.: B60T 13/57, B60T 13/24

(54) **SERVOMOTEUR PNEUMATIQUE D'ASSISTANCE AU FREINAGE A CLAPET PERFECTIONNE**
PNEUMATISCHER BREMSKRAFTVERSTÄRKER MIT VERBESSERTEM VENTIL
PNEUMATIC BRAKE SERVO WITH AN IMPROVED VALVE

(30) Priorité: 30.01.1996 FR 9601043
(43) Date de publication de la demande: 18.11.1998
(73) Titulaire: Bosch Systemes de Freinage, 93700 Drancy (FR)
(72) Inventeur: LEVRAI, Roland, F-93240 Stains (FR); TANGUY, Christian, F-95700 Frépillon (FR)
(86) Numéro de dépôt international: FR9601604
(87) Numéro de publication internationale: WO9728033

(56) Documents cités:
- EP-A- 0 644 094
- DE-A- 3 445 118
- FR-A- 2 030 679
- US-A- 3 037 487

## Description

La présente invention concerne les servomoteurs pneumatiques, du type de ceux qui sont utilisés pour fournir une assistance au freinage des véhicules automobiles.

De tels servomoteurs sont bien connus dans la technique automobile et comportent de façon classique une enveloppe à l'intérieur de laquelle se trouve un piston formé d'un moyeu et d'une jupe. Le piston définit une chambre avant reliée en permanence à une source de basse pression et une chambre arrière reliée sélectivement à la chambre avant ou à une source de haute pression par un moyen de valve. Ce moyen de valve est actionné par une tige de commande susceptible de s'appuyer, par l'intermédiaire de la face avant d'un plongeur, sur la face arrière d'un disque de réaction solidaire d'une tige de poussée, cette dernière actionnant un maître-cylindre. Le moyen de valve comporte habituellement un clapet dont la face avant annulaire coopère avec un premier siège de valve circulaire formé sur le plongeur et un second siège de valve circulaire formé sur le piston et de diamètre supérieur à celui du premier siège de valve. Un ressort de clapet sollicite la face avant annulaire en direction des sièges de valve de façon à ce que cette dernière soit toujours en contact avec au moins l'un de ces deux sièges.

De tels servomoteurs, présentent plusieurs inconvénients. C'est ainsi que, pour assurer la fermeture de la communication entre les chambres avant et arrière du servomoteur avant l'ouverture de la communication entre la chambre arrière et la source de haute pression, on est obligé de réaliser le plongeur et le moyeu du piston avec des tolérances très strictes pour éviter que la tige de commande n'ait une course morte trop longue, soit encore de concevoir le moyen de valve de façon telle que la "levée de clapet" entre le clapet et le premier siège de valve soit la plus faible possible.

Un inconvénient supplémentaire des servomoteurs connus réside dans le fait que le seul passage radial offert à l'air sous haute pression vers la chambre arrière lors d'un actionnement, de même que le seul passage axial offert à l'air de la chambre arrière vers la chambre avant lors d'un défreinage provoquent des turbulences dans l'air en mouvement, ralentissant l'action du servomoteur et induisant des bruits de fonctionnement qui peuvent devenir gênants.

Un autre inconvénient consécutif à la disposition concentrique et sensiblement coplanaire des deux sièges de valve, résulte en ce que la membrane souple de l'élément de clapet est soumise à une différentielle de pression variable entre la haute pression sensiblement constante régnant en permanence à l'intérieur du moyeu tubulaire, autour de la tige d'entrée, et la pression variable régnant dans la chambre annulaire entourant cette partie de la membrane souple de l'élément de clapet, sur une partie de laquelle s'exerce la pression régnant dans la chambre avant du servomoteur, et sur une autre partie de laquelle s'exerce la pression variable régnant dans la chambre arrière du servomoteur.

Cette différentielle de pression, présente au repos et en phase de relâchement de freinage, induit sur la face avant annulaire de l'élément de clapet une force axiale s'ajoutant à la force du ressort de valve et que doit vaincre le plongeur de valve lors de chaque phase de relâchement du freinage pour dégager la face avant annulaire de l'élément de clapet du premier siège de clapet formé dans le moyeu et rétablir la communication entre la chambre de travail arrière du servomoteur et la chambre de dépression, ce qui impose un surdimensionnement du ressort de rappel de la tige d'entrée se traduisant notamment par un effort important à fournir par le conducteur pour la mise en oeuvre du servomoteur, cet effort étant connu dans la technique sous le terme "d'effort d'attaque".

De plus, le clapet étant formé d'une membrane souple fixée de façon étanche par son bord périphérique extérieur au piston au moyen d'une coupelle métallique servant également d'appui pour le ressort de clapet et pour un ressort de rappel de la tige de commande, le montage du moyen de valve à trois voies dans le moyeu du piston est une opération délicate et complexe, dont le taux de rebut n'est pas négligeable et qui contribue à augmenter sensiblement le prix de revient du servomoteur.

Le document DE-A-3 445 118 tente d'apporter une solution à ces problèmes, en prévoyant de réaliser le plongeur à la manière d'un tiroir de distributeur. Le plongeur est susceptible de coulisser dans un alésage du moyeu du piston pour occulter ou découvrir deux lumières formées dans le moyeu et communiquant avec la chambre arrière du servomoteur. Une telle conception nécessite encore de réaliser un ajustement très précis entre l'alésage du moyeu du piston et le plongeur coulissant dans ce dernier. Elle nécessite également la présence d'un joint d'étanchéité aux bords d'une des lumières formées dans le moyeu du piston et d'un joint d'étanchéité à l'extrémité du plongeur. Ces joints coopèrent soit avec une arête du plongeur, soit avec le bord d'une des lumières, et ils sont donc sujets à une détérioration très rapide, ce qui nuit à la fiabilité du servomoteur ainsi équipé. De plus, ce document ne prévoit encore qu'un seul passage axial entre les chambres avant et arrière, et un seul passage radial entre la source de haute pression et la chambre arrière, résultant là encore en des turbulences génératrices de bruits de fonctionnement et en un ralentissement de l'action du servomoteur.

La présente invention se place dans ce contexte et a pour objet de proposer un sersomoteur dans lequel les passages d'air entre l'atmosphère et la chambre arrière d'une part, la chambre arrière et la chambre avant d'autre part, aient la plus grande section possible sans présenter d'obstacles pouvant engendrer des turbulences de façon à obtenir un fonctionnement silencieux et un temps de réponse aussi faible que possible, et ce de façon simple, fiable et économique.

Dans ce but, la présente invention propose un servomoteur pneumatique d'assistance au freinage, comportant une enveloppe possédant un axe de symétrie, séparée de façon étanche par au moins une structure de paroi mobile en au moins une chambre avant reliée en permanence à une source de basse pression, et au moins une chambre arrière reliée sélectivement à la chambre avant ou à une source de haute pression par un moyen de valve à trois voies comportant un plongeur coulissant dans un alésage d'un piston et solidaire d'une tige de commande, la position du plongeur dans l'alésage déterminant la communication entre les chambres avant et arrière ou la communication entre la chambre arrière et la source de haute pression.

Selon la présente invention, une structure de support est disposée dans le piston, cette structure de support comportant deux joints annulaires coopérant avec une surface cylindrique du plongeur et une partie médiane de guidage en coulissement du plongeur.

De façon avantageuse, les joints annulaires sont formés chacun avec un angle dont le sommet au repos est situé à une distance de l'axe de symétrie légèrement inférieure au rayon de la surface cylindrique du plongeur.

De façon également avantageuse, les angles des joints sont situés dans des plans parallèles éloignés axialement d'une distance légèrement inférieure à la longueur axiale de la surface cylindrique du plongeur.

Selon des caractéristiques également avantageuses, la surface cylindrique du plongeur est raccordée à l'avant et à l'arrière à des surfaces tronconiques.

De façon préférentielle, des ouvertures sont formées dans la partie médiane de la structure de support et communiquent avec des passages radiaux formés dans le piston et communiquant avec la chambre arrière du servomoteur. Le piston peut alors comporter des passages axiaux débouchant dans l'alésage dans lequel coulisse le plongeur et communiquant avec la chambre avant du servomoteur, ces passages axiaux étant alignés avec les passages radiaux communiquant avec la chambre arrière du servomoteur.

Selon un mode de réalisation, la valve à trois voies est disposée dans une partie tubulaire arrière du piston solidaire de la structure de paroi mobile du servomoteur.

Selon un autre mode de réalisation, la valve à trois voies est disposée dans un piston d'un module de commande pilotant à distance le servomoteur. Un tel module de commande peut avantageusement comporter un piston étagé divisant un alésage en un premier volume relié en permanence à la chambre arrière du servomoteur par une canalisation, en un second volume relié en permanence à la chambre avant du servomoteur par une canalisation, et en une chambre annulaire d'assistance reliée par une canalisation à la sortie d'un émetteur de pression actionné par le servomoteur

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de côté, en coupe longitudinale, d'un servomoteur pneumatique d'assistance au freinage, équipé d'un clapet réalisé conformément à la présente invention;
- La Figure 2 représente une vue à plus grande échelle de la partie centrale arrière du servomoteur de la Figure 1;
- La Figure 3 représente une vue de côté, en coupe longitudinale, d'un module de commande d'un servomoteur pneumatique d'assistance au freinage, ce module étant équipé d'un clapet réalisé conformément à la présente invention; et
- La Figure 4 représente une vue à plus grande échelle de la partie centrale arrière du module de commande de la Figure 3.

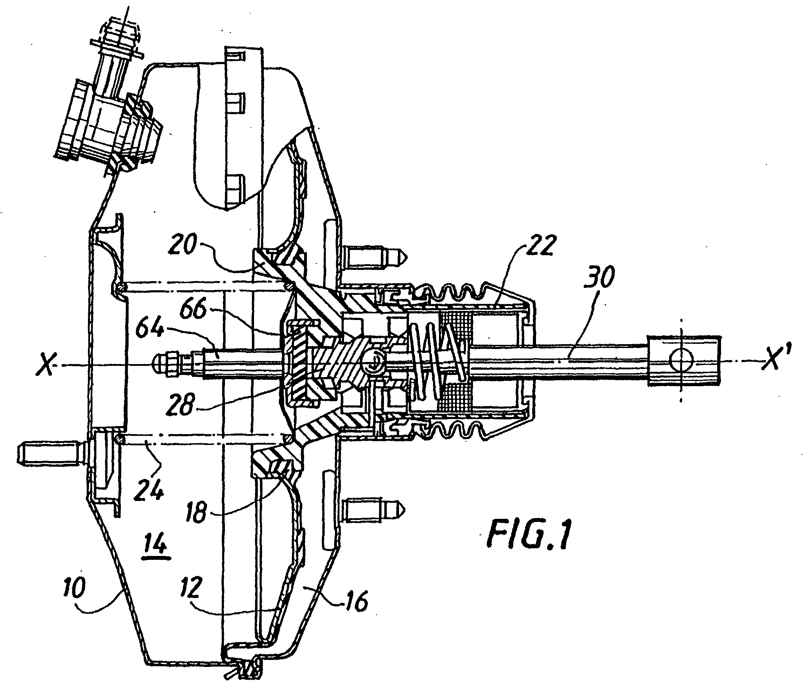

La Figure 1 représente une vue en coupe d'un servomoteur pneumatique d'assistance au freinage prévu pour être placé de façon conventionnelle entre la pédale de frein d'un véhicule et la maître-cylindre commandant la pression dans le circuit de freinage hydraulique de ce véhicule.

Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

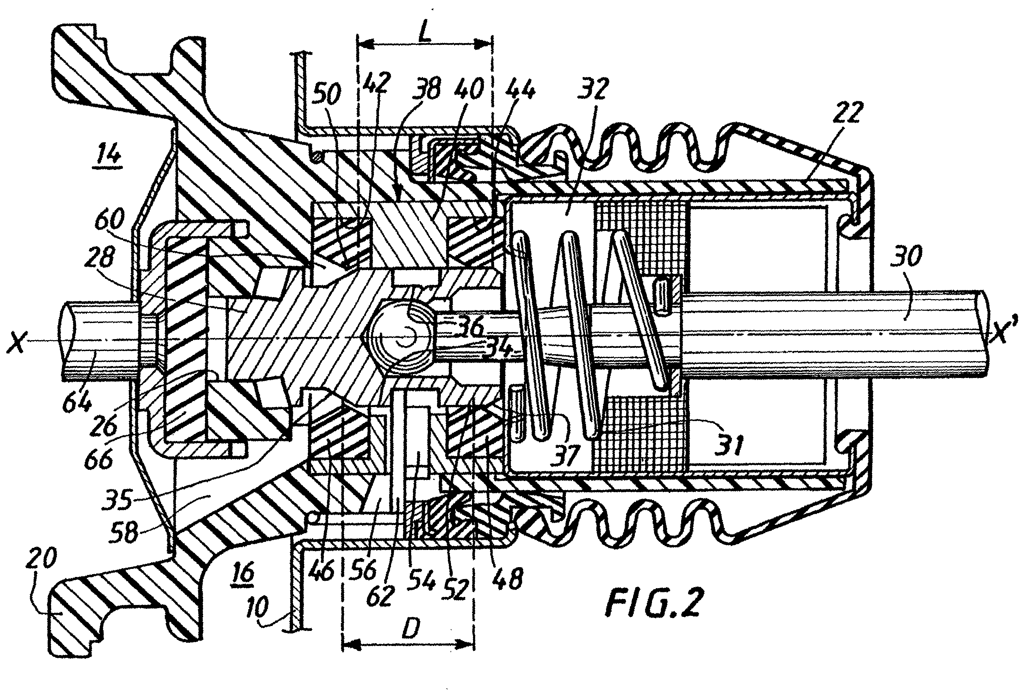

Le servomoteur représenté sur les Figures 1 et 2 comprend un enveloppe extérieure 10 en forme de coquille, présentant une symétrie de révolution autour d'un axe X-X'. Seule la partie centrale arrière de cette enveloppe 10 est représentée sur la Figure 2.

Une structure de paroi mobile 12 délimite à l'intérieur de l'enveloppe 10 une chambre avant 14, reliée en permanence à une source de dépression par une canalisation 15, et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20, solidaire de la structure de paroi mobile 12, et disposé selon l'axe X-X' du servomoteur, le bord périphérique extérieur de la membrane souple étant fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant de l'enveloppe 10 maintient normalement le piston 20 dans la position arrière de repos illustrée sur les Figures 1 et 2, dans laquelle la chambre arrière 16 présente son volume minimal et la chambre avant 14 son volume maximal.

Un plongeur 28, symétrique par rapport à l'axe X-X', est reçu à coulissement par son extrémité avant dans un alésage 26, éventuellement étagé, formé dans la partie centrale du piston 20. L'extrémité avant d'une tige de commande 30 du servomoteur, disposée également selon l'axe X-X', est montée rotulante dans un alésage borgne du plongeur 28. L'extrémité arrière de la tige de commande 30 est commandée directement par la pédale de frein du véhicule (non représentée), et est rappelée dans sa position de repos par un ressort de rappel 31 en appui à l'intérieur de la partie tubulaire 22.

De façon classique, lorsque le conducteur du véhicule appuie sur la pédale de frein, la tige de commande 30 actionne un moyen de valve à trois voies pour faire communiquer l'espace annulaire 32 autour de la tige de commande 30 avec la chambre arrière 16, et ainsi créer une différence de pressions de part et d'autre de la paroi mobile 12, résultant en une force d'assistance proportionnelle à l'effort exercé sur la pédale de frein.

Conformément à la présente invention, le moyen de valve à trois voies est constitué par le plongeur 28 lui-même.

De façon plus précise, comme on le voit sur la Figure 2, le plongeur 28 est formé avec une surface extérieure cylindrique 34 dans laquelle une gorge périphérique 36 définit deux épaulements radiaux. La surface 34 est raccordée à l'avant à une surface tronconique 35, et à l'arrière à une surface tronconique 37.

5 Une structure de support 38 est disposée de façon fixe dans la partie tubulaire 22 et comporte une partie médiane 40 entre deux logements annulaires 42 et 44 pour des joints annulaires 46 et 48 respectivement. Le diamètre intérieur de la partie médiane 40 est légèrement supérieur au diamètre de la surface cylindrique 34, de façon à procurer un guidage pour le plongeur dans ses mouvements de translation selon l'axe X-X'.

Les joints annulaires 46 et 48 sont identiques et présentent une section transversale de forme polygonale, dont la partie extérieure (par rapport à l'axe X-X') est complémentaire de celle des logements 42 et 44. La partie intérieure de la section de chaque joint est triangulaire, et forme un angle saillant 50 et 52 respectivement, dont le sommet, au repos, est situé à une distance de l'axe X-X' légèrement inférieure au rayon de la surface cylindrique 34 du plongeur 28.

De plus, les angles 50 et 52 sont situés dans des plans parallèles éloignés axialement d'une distance D, et la longueur axiale L de la surface cylindrique 34 du plongeur 28 est légèrement supérieure à la distance D.

Dans sa partie médiane 40, la structure de support 38 comporte des ouvertures radiales 54, régulièrement réparties autour de l'axe X-X', communiquant avec des passages radiaux 56 formées dans la partie tubulaire 22 du piston 20 et débouchant dans la chambre arrière 16 du servomoteur.

Le piston 20 est également formé avec des passages axiaux 58, régulièrement répartis autour de l'axe X-X', et faisant communiquer la chambre avant 14 du servomoteur avec la partie avant 60 du volume intérieur de l'alésage 26 autour du plongeur 28, en avant de la surface tronconique 35.

Enfin, au moins un organe de butée 62 est monté dans la partie tubulaire 22 du piston 20 pour délimiter la course axiale du plongeur 28 par rapport au piston 20 et définir sa position arrière de repos par rapport à ce dernier. L'organe de butée 62 traverse par exemple les ouvertures 52 et les passages 54 pour former un appui à la face arrière de l'épaulement avant de la gorge 36 du plongeur 28.

En position de repos, les différents composants du servomoteur occupent les positions relatives illustrées sur les Figures 1 et 2. Dans cette position, le plongeur 28 est en appui vers l'arrière sur l'organe de butée 60 sous l'effet de la sollicitation du ressort 31. L'angle 52 du joint 48 est en appui sur la surface 34 du plongeur, isolant ainsi l'espace annulaire 32 du reste du servomoteur. La surface 34 est dégagée de l'angle 50 du joint 46 et permet donc la communication entre les chambres avant 14 et arrière 16 par l'intermédiaire des passages 58, du volume 60, des ouvertures 54 et des passages 56.

Pour obtenir une action de freinage, le conducteur du véhicule appuie sur la pédale de frein, ce qui résulte en un mouvement vers l'avant de la tige de commande 30 et du plongeur 28. Ce dernier coulisse dans un premier temps dans l'alésage 26 et dans la surface de guidage formée par la partie médiane 40 de la structure de support 38.

Pendant ce mouvement, la surface 34 reste en contact avec l'angle 52, tandis que la surface tronconique 35 vient en contact de l'angle 50, qu'elle soulève légèrement en éloignement de l'axe X-X' pour qu'il vienne en contact de la surface 34. La communication entre les chambres avant 14 et arrière 16 est alors interrompue, par la fermeture du passage de valve constitué par le joint annulaire 46 coopérant avec la surface 34 du plongeur.

Le mouvement vers l'avant de la tige de commande 30 et du plongeur 28 se poursuivant, la surface 34 va rester en contact avec l'angle 50, tandis qu'elle va perdre le contact avec l'angle 52. L'air à la pression atmosphérique dans le volume annulaire 32 peut ainsi parvenir dans la chambre arrière 16 par les ouvertures 54 et les passages 56. La pression peut ainsi augmenter dans la chambre arrière 16 du servomoteur et créer une différence de pressions sur la paroi mobile 12, résultant en une force d'assistance croissant pour la déplacer vers l'avant, cette force étant transmise à une tige de poussée 64 par une face avant annulaire du piston 20 agissant sur un disque de réaction 66, sur la partie centrale duquel est en appui la face avant du plongeur 28.

De façon avantageuse grâce à la présente invention, on pourra réaliser les ouvertures 54 et les passages 56 de telle sorte qu'ils s'étendent sur des arcs de cercle d'étendue angulaire relativement importante, puisque les joints 46 et 48 de même que la structure de support 38 ne sont soumis qu'à des efforts relativement peu élevés, et n'ont donc pas besoin d'avoir une résistance mécanique très élevée. On pourra donc profiter au maximum de l'ouverture sur 360 degrés du passage de valve constitué par le joint annulaire 48 coopérant avec la surface 34 du plongeur.

De plus, on voit que les deux passages de valve, entre l'atmosphère et la chambre arrière d'une part, et entre la chambre arrière et la chambre avant d'autre part, sont situés dans des plans transversaux différents, contenant les angles 50 et 52, et ne sont plus coplanaires comme dans la conception classique de l'art antérieur. Il s'ensuit que le diamètre de ces passages de valve sont indépendants l'un de l'autre, et ne sont limités que par le diamètre maximal de la partie tubulaire 22 ou par le diamètre minimal du plongeur 28. On pourra donc donner à ces passages de valve tout diamètre voulu entre ces deux limites.

Lorsque le conducteur désire réduire l'action de freinage ou y mettre fin, il diminue la force appliquée à la tige de commande 30. Celle-ci recule alors et entraîne dans son mouvement le plongeur 28. Dans ce mouvement de recul, la surface 34 reste en contact avec l'angle 50, tandis que la surface tronconique 37 vient en contact de l'angle 52, qu'elle soulève légèrement en éloignement de l'axe X-X' pour qu'il vienne en contact de la surface 34. La communication entre la chambre arrière 16 et l'atmosphère est alors interrompue, par la fermeture du passage de valve constitué par le joint annulaire 48 coopérant avec la surface 34 du plongeur.

Le mouvement vers l'arrière de la tige de commande 30 et du plongeur 28 se poursuivant, la surface 34 va rester en contact avec l'angle 52, tandis qu'elle va perdre le contact avec l'angle 50. L'air contenu dans la chambre arrière peut ainsi parvenir dans la chambre avant 14, reliée en permanence à une source de dépression, par les passages 56 et les ouvertures 54. La pression peut ainsi diminuer dans la chambre arrière 16 du servomoteur et faire décroître la différence de pressions sur la paroi mobile 12, résultant en une force d'assistance décroissante, la paroi mobile 12 se déplaçant alors vers l'arrière sous l'effet du ressort 24.

Un re-équilibrage rapide de pressions (en l'occurrence de dépression) entre les deux chambres 14 et 16, est obtenu en autorisant un recul relativement important du plongeur 28 par rapport au piston 20. On voit donc là encore que l'air est amené à s'écouler à travers les passages 58, dont l'étendue angulaire peut être relativement importante.

De plus, comme on l'a vu pour la phase d'actionnement, le diamètre du passage de valve 34-50 n'est limité que par le diamètre maximal de la partie tubulaire 22 ou par le diamètre minimal du plongeur 28. On pourra donc lui donner toute valeur désirée.

L'invention permet également de réduire dans des proportions importantes le bruit de fonctionnement du servomoteur. La conception particulière de la valve à trois voies constituant le clapet selon l'invention permet de prévoir que les ouvertures ou passages 54, 56 et 58 soient en nombre égal, régulièrement répartis autour de l'axe X-X', et de sorte que leurs centres soient dans un même plan, ainsi qu'on l'a représenté sur la Figure 2. De la sorte, les masses d'air mises en mouvement lors du fonctionnement du servomoteur équipé du clapet selon la présente invention auront une vitesse dont les composantes ne seront contenues que dans un plan, par exemple celui de la Figure 2.

En d'autres termes, l'écoulement de l'air dans le servomoteur est parfaitement symétrique autour de l'axe X-X' dans tous les cas de fonctionnement, c'est-à-dire que toutes les turbulences sont éliminées, ainsi que les bruits en résultant.

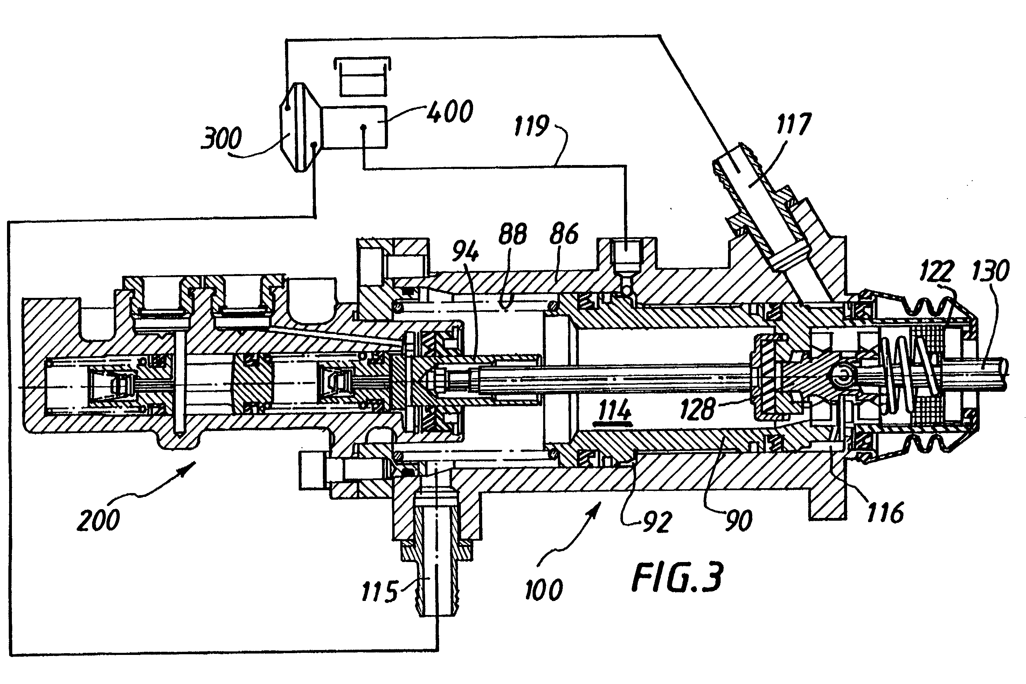

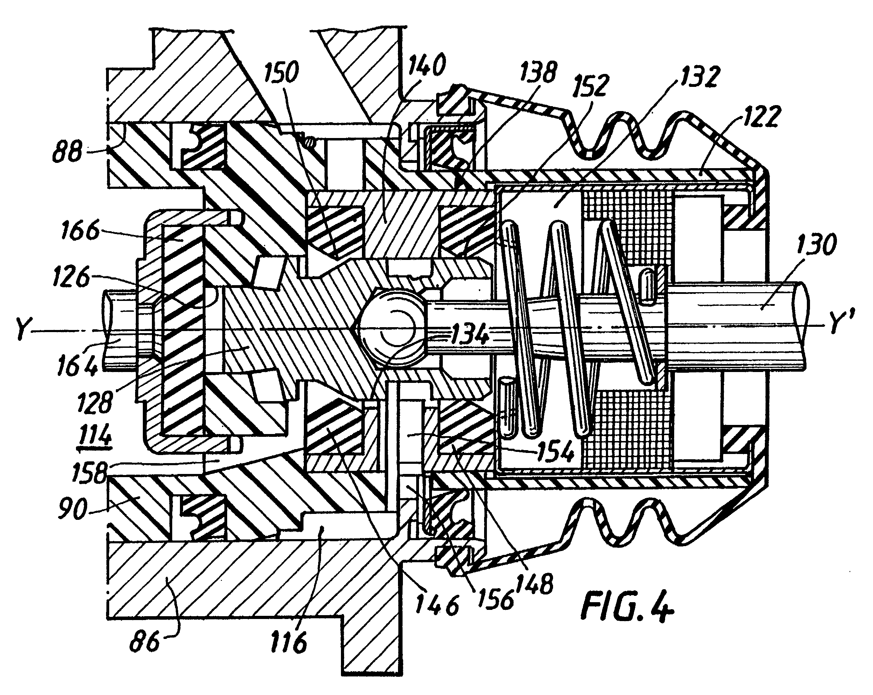

On a représenté sur les Figures 3 et 4 un second mode de réalisation de la présente invention, applicable à un module de commande 100 d'un servomoteur du type de celui qui est décrit par exemple dans le document EP-A-0 326 965. Sur ces Figures, les éléments correspondant à ceux des Figures 1 et 2 sont affectés des mêmes références numériques, augmentées d'une centaine.

Le module de commande 100 est actionné par une tige de commande 130 reliée à une pédale de frein (non représentée) située dans l'habitacle du véhicule. Le module 100 comporte un corps 86 présentant une symétrie de révolution autour d'un axe Y-Y' et formé avec un alésage étagé 88 dans lequel coulisse de façon étanche un piston étagé 90. Le piston 90 divise intérieurement l'alésage 88 en un premier volume 116 formé à l'arrière de l'alésage et un second volume 114 formé à l'avant, et relié en permanence à une source de dépression par une canalisation 115. Le piston 90 est prolongé vers l'arrière par une partie tubulaire arrière 122 coulissant de façon étanche dans le corps 86, et il est formé avec un alésage 126, éventuellement étagé, dans lequel coulisse un plongeur 128.

Le premier volume 116 est mis sélectivement en communication avec le second volume 114 ou avec l'espace annulaire 132 autour de la tige de commande 130 où règne par exemple la pression atmosphérique, par un clapet à trois voies conforme à celui qui a été décrit en relation avec les Figures 1 et 2, disposé dans un logement du piston 90, et actionné par un plongeur 128 solidaire de la tige de commande 130 et symétrique par rapport à l'axe Y-Y' du module de commande 100.

Comme pour le premier mode de réalisation de l'invention, un premier passage de valve comporte un joint 148 coopérant avec la surface cylindrique 134 du plongeur 128, et le second passage de valve comporte un joint 146 coopérant avec cette même surface 134.

Une structure de support 138 identique à la structure 38 décrite plus haut joue le même rôle de guidage du plongeur 128 et de logement des joints 146 et 148, et ne sera donc pas décrite plus en détail.

Le piston 90 est également formé avec des passages axiaux 158, régulièrement répartis autour de l'axe Y-Y', et faisant communiquer le second volume 114 du module de commande 100 avec le volume 160 autour du plongeur 128, et un organe de butée 162 est monté dans le piston 90 pour délimiter la course axiale du plongeur 128 par rapport au piston 90 et définir sa position arrière de repos par rapport à ce dernier.

Comme on l'a représenté sur la Figure 3, le module de commande 100 est destiné à piloter à distance un servomoteur 300, représenté schématiquement, formé d'une enveloppe divisée intérieurement par une cloison mobile étanche en une chambre avant reliée en permanence au second volume 114 par la canalisation 115, et une chambre arrière reliée en permanence au premier volume 116 par une canalisation 117.

Un émetteur de pression tel qu'un maître-cylindre simple 400 est fixé sur la paroi avant du servomoteur 300 et est actionné par ce servomoteur. La sortie de cet émetteur de pression 400 est reliée par une canalisation hydraulique 119 à une chambre annulaire d'assistance 92 formée dans le corps 86 du module de commande 100 entre les épaulements de l'alésage étagé 88 et du piston étagé 90.

Selon cette conception, lorsque le conducteur du véhicule actionne la pédale de frein, la tige de commande 130 se déplace vers l'avant. Le plongeur 128 commande alors le fonctionnement du clapet à trois voies ainsi qu'on l'a décrit plus haut pour que celui-ci isole tout d'abord les volumes 114 et 116 l'un de l'autre, puis mette le premier volume 116 en communication avec l'espace annulaire 132. Il en résulte une augmentation de pression dans le volume 116, transmise par la canalisation 117 à la chambre arrière du servomoteur 300, dont la chambre avant est reliée en permanence à la source de dépression.

Cette différence de pression s'exerce sur les deux faces de la cloison mobile du servomoteur 300 et tend à la déplacer vers l'avant, de sorte qu'elle déplace le piston de l'émetteur de pression 400 et provoque une augmentation de pression dans la canalisation 119, transmise à la chambre annulaire d'assistance 92.

La pression dans la chambre annulaire 92 s'exerce sur l'épaulement du piston 90 et tend ainsi à le faire avancer. Le piston 90 comporte une face annulaire entourant la face avant du plongeur 128, ces deux faces étant en appui sur un disque de réaction 166 solidaire d'une tige de poussée 164. Le disque de réaction 166 reçoit donc simultanément l'effort d'entrée transmis par le plongeur 128 et l'effort d'assistance transmis par le piston 90 sur lequel s'exerce la pression dans la chambre 92. Le disque de réaction 166 et la tige de poussée 164 transmettent la somme de ces deux efforts au piston 94 d'un maître-cylindre 200, qui engendre alors une augmentation de pression dans les moteurs de frein (non représentés), ce qui provoque l'action de freinage assisté requise par le conducteur du véhicule.

Comme dans le mode de réalisation précédent, les passages axiaux et les ouvertures radiales formés dans la structure de support 138, et les passages radiaux formés dans le piston 90 sont alignés en direction axiale et s'étendent sur des arcs de cercle de même angle au centre, de façon à leur donner des étendues angulaires relativement importantes, ces différents éléments n'étant soumis qu'à des efforts relativement peu élevés, et n'ayant donc pas besoin d'avoir une résistance mécanique très élevée.

De même, les deux passages de valve, entre l'atmosphère et le volume arrière 116 d'une part, et entre les volumes arrière 116 et avant 114 d'autre part, sont situés dans des plans transversaux différents, et leurs diamètres sont indépendants l'un de l'autre. On pourra encore leur donner des dimensions prédéterminées, résultant en une section de passage de l'air prédéterminée.

La pression peut ainsi augmenter relativement rapidement dans le volume arrière 116 du module de commande 100, et donc dans la chambre arrière du servomoteur 300, et créer une différence de pressions sur la paroi mobile, résultant en une pression hydraulique croissant rapidement dans la chambre d'assistance 92 pour déplacer le piston 90 vers l'avant.

Le bruit de fonctionnement du module de commande est également réduit dans des proportions importantes. Comme on l'a vu plus haut, la conception particulière de la valve à trois voies constituant le clapet selon l'invention permet de prévoir que les différentes ouvertures de passage d'air soient en nombre égal, régulièrement réparties autour de l'axe Y-Y', et de sorte que leurs centres soient dans un même plan, comme on le voit sur la Figure 4. De la sorte, les masses d'air mises en mouvement lors du fonctionnement du module de commande équipé du clapet de la présente invention auront une vitesse dont les composantes ne seront contenues que dans un plan, par exemple celui de la Figure 4.

En d'autres termes, l'écoulement de l'air dans le module de commande est parfaitement symétrique autour de l'axe Y-Y', dans tous les cas de fonctionnement, c'est-à-dire que toutes les turbulences sont éliminées, ainsi que les bruits en résultant.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi, par exemple, que le mode de réalisation de l'invention illustré sur les Figures 1 et 2 est bien entendu applicable de la même façon à des servomoteurs de type tandem ou à chambres additionnelles.

## Revendications

1. Servomoteur pneumatique d'assistance au freinage, comportant une enveloppe (10) possédant un axe de symétrie (X-X'), séparée de façon étanche par au moins une structure de paroi mobile (12) en au moins une chambre avant (14) reliée en permanence à une source de basse pression, et au moins une chambre arrière (16) reliée sélectivement à la chambre avant (14) ou à une source de haute pression par un moyen de valve à trois voies comportant un plongeur (28, 128) coulissant dans un alésage (26, 126) d'un piston (20, 90) et solidaire d'une tige de commande (30, 130), la position du plongeur (28, 128) dans l'alésage (26, 126) déterminant la communication entre les chambres avant (14) et arrière (16) ou la communication entre la chambre arrière (16) et la source de haute pression, **caractérisé en ce qu'**une structure de support (38, 138) est disposée dans le piston (20, 90), cette structure de support (38, 138) comportant deux joints annulaires (46, 48; 146, 148) coopérant avec une surface cylindrique (34, 134) du plongeur (28, 128) et une partie médiane (40, 140) de guidage en coulissement du plongeur (28, 128).

2. Servomoteur pneumatique selon la revendication 1, **caractérisé en ce que** les joints annulaires (46, 48; 146, 148) sont formés chacun avec un angle (50, 52; 150, 152) dont le sommet au repos est situé à une distance de l'axe de symétrie (X-X') légèrement inférieure au rayon de la surface cylindrique (34, 134) du plongeur (28, 128).

3. Servomoteur pneumatique selon la revendication 2, **caractérisé en ce que** les angles (50, 52; 150, 152) des joints (46, 48; 146, 148) sont situés dans des plans parallèles éloignés axialement d'une distance (D) légèrement inférieure à la longueur axiale (L) de la surface cylindrique (34, 134) du plongeur (28, 128).

4. Servomoteur pneumatique selon la revendication 3, **caractérisé en ce que** la surface cylindrique (34, 134) du plongeur (28, 128) est raccordée à l'avant et à l'arrière à des surfaces tronconiques (35, 37; 135, 137).

5. Servomoteur pneumatique selon la revendication 4, **caractérisé en ce que** des ouvertures (54, 154) sont formées dans la partie médiane (40, 140) de la structure de support (38, 138) et communiquent avec des passages radiaux (56, 156) formés dans le piston (20, 90) et communiquant avec la chambre arrière du servomoteur.

6. Servomoteur pneumatique selon la revendication 5, **caractérisé en ce que** le piston (20, 90) comporte des passages axiaux (58, 158) débouchant dans l'alésage dans lequel coulisse le plongeur (28, 128) et communiquant avec la chambre avant du servomoteur, ces passages axiaux (58, 158) étant alignés avec les passages radiaux (56, 156) communiquant avec la chambre arrière du servomoteur.

7. Servomoteur pneumatique selon l'une quelconque des revendications précédentes, **caractérisé en ce que** la valve à trois voies est disposée dans une partie tubulaire arrière (22) du piston (20) solidaire de la structure de paroi mobile (12) du servomoteur.

8. Servomoteur pneumatique selon l'une quelconque des revendications 1 à 6, **caractérisé en ce que** la valve à trois voies est disposée dans un piston (90) d'un module de commande (100) pilotant à distance le servomoteur.

9. Servomoteur pneumatique selon la revendication 8, **caractérisé en ce que** le module de commande (100) comporte un piston étagé (90) divisant un alésage (88) en un premier volume (116) relié en permanence à la chambre arrière du servomoteur (300) par une canalisation (117), en un second volume (114) relié en permanence à la chambre avant du servomoteur (300) par une canalisation (115), et en une chambre annulaire d'assistance (92) reliée par une canalisation (119) à la sortie d'un émetteur de pression (400) actionné par le servomoteur.

## Claims

1. A pneumatic booster for braking assistance, comprising an envelope (10) presenting an axis of symmetry (X-X'), separated sealingly by at least one movable partition structure (12) into at least one front chamber (14) connected permanently to a source of low pressure, and at least one rear chamber (16) connected selectively to the front chamber (14) or to a source of high pressure through a three way valve means comprising a plunger (28, 128) sliding in a bore (26, 126) of a piston (20, 90) and solid with a control rod (30, 130), the position of the plunger (28, 128) in the bore (26, 126) determining communication between the front chamber (14) and the rear chamber (16) or communication between the rear chamber (16) and the source of high pressure **characterised in that** a support structure (38, 138) is disposed in the piston (20, 90), this support structure (38, 138) comprising two annular seals (46, 48; 146, 148) cooperating with a cylindrical surface (34, 134) of the plunger (28, 128) and a median part (40, 140) for guiding sliding of the plunger (28, 128).

2. A pneumatic booster according to claim 1, **characterised in that** the annular seals (46, 48; 146, 148) are each formed with an angled edge (50, 52; 150, 152) whose vertex in the rest condition is disposed at a distance from the axis of symmetry (X-X') which is slightly less than the radius of the cylindrical surface (34, 134) of the plunger (28, 128).

3. A pneumatic booster according to claim 2, **characterised in that** the angled edges (50, 52; 150, 152) of the seals (46, 48; 146, 148) are disposed in parallel planes which are spaced apart axially by a distance (D) which is slightly less than the axial length (L) of the cylindrical surface (34, 134) of the plunger (28, 128).

4. A pneumatic booster according to claim 3, **characterised in that** the cylindrical surface (34, 134) of the plunger (28, 128) leads at its front and at its rear into truncated conical surfaces (35, 37; 135, 137).

5. A pneumatic booster according to claim 4, **characterised in that** the openings (54, 154) are formed in the median part (40, 140) of the support structure (38, 138) and communicate with radial passages (56, 156) formed in the piston (20, 90) and which communicate with the rear chamber of the booster.

6. A pneumatic booster according to claim 5, **characterised in that** the piston (20, 90) comprises axial passages (58, 158) which open into the bore in which the plunger (28, 128) slides and communicate with the front chamber of the booster, the axial passages (58, 158) being aligned with the radial passages (56, 156) communicating with the rear chamber of the booster.

7. A pneumatic booster according to any one of the preceding claims, **characterised in that** the three way valve is disposed in a tubular rear part (22) of the piston (20) solid with the movable partition structure (12) of the booster.

8. A pneumatic booster according to any one of claims 1 to 6, **characterised in that** the three way valve is disposed in a piston (90) of a control module (100) which controls the booster remotely.

9. A pneumatic booster according to claim 8, **characterised in that** the control module (100) comprises a stepped piston (90) dividing a bore (88) into a first volume (116) connected permanently to the rear chamber of the booster (300) through a duct (117) and a second volume (114) connected permanently to the front chamber of the booster (300) through a duct (115), and an annular assistance chamber (92) connected through a duct (119) to the output of a pressure generator (400) actuated by the booster.

## Patentansprüche

1. Pneumatischer Bremskraftverstärker, der ein Gehäuse (10) mit einer Symmetrieachse (X-X') aufweist, das in dichter Weise durch wenigstens eine bewegliche Wandstruktur (12) in wenigstens eine vordere Kammer (14), die stets mit einer Unterdruckquelle verbunden ist, und wenigstens eine hintere Kammer (16) unterteilt ist, die wahlweise mit der vorderen Kammer (14) oder einer Hochdruckquelle durch eine Dreiwegeventil-Anordnung verbunden ist, die einen Tauchkolben (28, 128) umfaßt, der in einer Bohrung (26, 126) eines Kolbens (20, 90) gleitet, fest mit einer Steuerstange (30, 130) verbunden ist und dessen Stellung in der Bohrung (26, 126) die Verbindung zwischen der vorderen Kammer (14) und der hinteren Kammer (16) oder zwischen der hinteren Kammer (16) und der Hochdruckquelle bestimmt, **dadurch gekennzeichnet, daß** in dem Kolben (20, 90) eine Stützstruktur (38, 138) angeordnet ist, die zwei ringförmige Dichtungen (46, 48; 146, 148) aufweist, die mit einer zylindrischen Fläche (34, 134) des Tauchkolbens (28, 128) zusammenwirken, sowie einen mittleren Teil (40, 140) zur gleitenden Führung des Tauchkolbens (28, 128).

2. Pneumatischer Bremskraftverstärker nach Anspruch 1, **dadurch gekennzeichnet, daß** die ringförmigen Dichtungen (46, 48; 146, 148) jeweils einen Winkel (50, 52; 150, 152) aufweisen, dessen Scheitel sich in entspanntem Zustand in einem Abstand von der Symmetrieachse (X-X') befindet, der etwas kleiner ist als der Radius der zylindrischen Fläche (34, 134) des Tauchkolbens (28, 128).

3. Pneumatischer Bremskraftverstärker nach Anspruch 2, **dadurch gekennzeichnet, daß** die Winkel (50, 52; 150, 152) der Dichtungen (46, 48; 146, 148) in parallelen Ebenen angeordnet sind, die in einem axialen Abstand voneinander entfernt sind, der etwas kleiner ist als die axiale Länge (L) der zylindrischen Fläche (34, 134) des Tauchkolbens (28, 128).

4. Pneumatischer Bremskraftverstärker nach Anspruch 3, **dadurch gekennzeichnet, daß** sich an die zylindrische Fläche (34, 134) des Tauchkolbens (28, 128) vorne und hinten kegelstumpfförmige Flächen (35, 37; 135, 137) anschließen.

5. Pneumatischer Bremskraftverstärker nach Anspruch 4, **dadurch gekennzeichnet, daß** Öffnungen (54, 154) in dem mittleren Teil (40, 140) der Stützstruktur (38, 138) ausgebildet und mit radialen Durchgängen (56, 156) verbunden sind, die in dem Kolben (20, 90) ausgebildet und mit der hinteren Kammer des Bremskraftverstärkers verbunden sind.

6. Pneumatischer Bremskraftverstärker nach Anspruch 5, **dadurch gekennzeichnet, daß** der Kolben (20, 90) axiale Durchgänge (58, 158) aufweist, die in der Bohrung münden, in der der Tauchkolben (28, 128) gleitet, und die mit der vorderen Kammer des Bremskraftverstärkers verbunden sind, wobei die axialen Durchgänge (58, 158) mit den radialen Durchgängen (56, 156) ausgerichtet sind, die mit der hinteren Kammer des Bremskraftverstärkers verbunden sind.

7. Pneumatischer Bremskraftverstärker nach einem der vorherstehenden Ansprüche, **dadurch gekennzeichnet, daß** das Dreiwegeventil in einem röhrenförmigen hinteren Teil (22) des Kolbens (20) angeordnet ist, der fest mit der beweglichen Wandstruktur (12) des Bremskraftverstärkers verbunden ist.

8. Pneumatischer Bremskraftverstärker nach einem der Ansprüche 1 bis 6, **dadurch gekennzeichnet, daß** das Dreiwegeventil in einem Kolben (90) eines Steuermoduls (100) angeordnet ist, der über eine Distanz den Bremskraftverstärker betätigt.

9. Pneumatischer Bremskraftverstärker nach Anspruch 8, **dadurch gekennzeichnet, daß** das Steuermodul (100) einen gestuften Kolben (90) aufweist, der eine Bohrung (88) teilt in ein erstes Volumen (116), das über einen Kanal (117) stets mit der hinteren Kammer des Bremskraftverstärkers (300) verbunden ist, ein zweites Volumen (114), das durch einen Kanal (115) stets mit der vorderen Kammer des Bremskraftverstärkers (300) verbunden ist, und eine ringförmige Hilfskammer (92), die über eine Leitung (119) mit dem Ausgang eines Druckgebers (400) verbunden ist, der durch den Bremskraftverstärker betätigt wird.
